# DEMANDE DE BREVET EUROPEEN

(11) **EP 2 660 621 A1**
(43) Date de publication de la demande: **06.11.2013**
(21) Numéro de dépôt: 13163620.1
(22) Date de dépôt: 12.04.2013
(51) Int. Cl.: G01S 7/38, F41J 2/00, F41J 9/10

(54) **Procédé de leurrage angulaire, dispositif et systeme de leurrage associé**

(30) Priorité: 03.05.2012 FR 1201281
(71) Demandeur: Thales, 92200 Neuilly Sur Seine (FR)
(72) Inventeur: Fabre, Jean-Paul, 78851 ELANCOURT (FR)
(74) Mandataire: Lucas, Laurent Jacques

(57) **Abrégé**

La présente invention concerne un procédé de leurrage angulaire mis en oeuvre par un porteur (1) et au moins un dispositif de leurrage (2) apte à être tracté par ledit porteur comportant un brouilleur de bord (10) et au moins une antenne de réception, ledit dispositif de leurrage (2) possédant deux modes de fonctionnement et le choix du mode de fonctionnement est déterminé en fonction des caractéristiques des signaux électromagnétiques captés par le groupe d'au moins une antenne du porteur.

La présente invention concerne également le dispositif de leurrage angulaire et le système de leurrage associé.

## Description

La présente invention concerne le domaine des contre-mesures et plus particulièrement celui du brouillage et du leurrage. Elle concerne un procédé de leurrage angulaire, un dispositif de leurrage angulaire tracté bi mode et un système de leurrage angulaire. La présente invention peut trouver son application dans le domaine maritime ou aéroporté.

Les leurres angulaires tractés ou leurres remorqués (towed decoys selon la terminologie anglo-saxonne) sont des brouilleurs contenus dans un dispositif lancé depuis une plate-forme mobile et tracté par cette dernière. Ce dispositif permet de leurrer les autodirecteurs des missiles ou les radars en produisant des échos éloignés de la plate-forme de façon à les tromper sur l'emplacement réel de la plate-forme et ainsi la protéger.

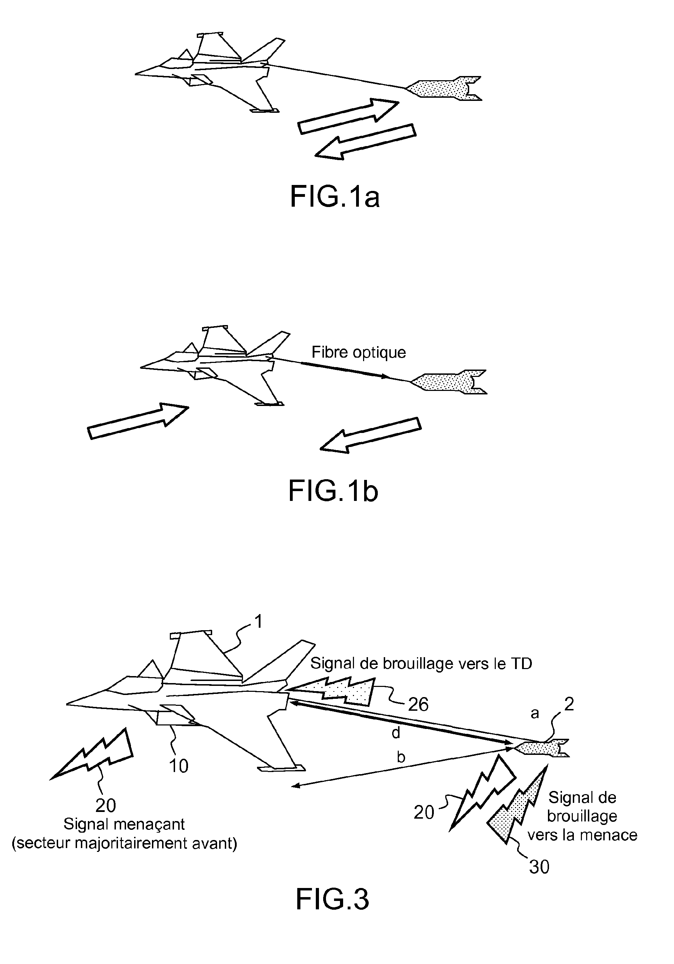

Il existe actuellement deux types de dispositif de leurrage angulaire. Un premier type de leurre, illustré figure 1a, est un répondeur simple. Ce type de leurre agit comme un répéteur. Le dispositif reçoit le signal menaçant et le répète avec un retard éventuel lié à la position du leurre dans l'espace, le signal est répété avec un retard si la plate-forme à protéger est située entre la menace et le leurre. Un problème avec ce type de leurre est qu'il n'est pas très performant en terme de technique de brouillage. En effet, le signal de brouillage est le signal menaçant réémis après éventuellement amplification. Le facteur de forme est le même que celui du signal menaçant ; par exemple, dans le cas d'un radar impulsionnel, le dispositif ne peut pas effectuer un brouillage continu.

Pour limiter les coûts, la charge utile est généralement la plus simple possible et le leurre du type répondeur large bande. Il n'y a aucune discrimination entre les différents signaux ; de ce fait, dans un environnement dense en émissions électromagnétiques, l'amplificateur du leurre peut être saturé par un signal non dangereux puissant, et donc il se peut qu'il ne puisse pas répondre efficacement contre une vraie menace.

De même, si la menace vient de l'avant du porteur, le signal provenant du leurre sera toujours en retard par rapport à l'écho de peau du porteur ce qui n'est pas efficace en terme de brouillage.

Le deuxième type de leurre, illustré figure 1b, est du type émetteur tracté. Ce dispositif est beaucoup plus efficace en termes de brouillage car il permet d'utiliser toutes les techniques de brouillage du porteur. Cependant, ce type de dispositif est assez compliqué à mettre en oeuvre. En effet, la liaison hyperfréquence entre le porteur et le dispositif de leurrage est généralement effectuée par fibre optique. Un des problèmes de la liaison à fibre optique est l'interfaçage avec le porteur. En effet, la connectique doit être parfaitement disposée, la diode d'émission, la fibre optique et le récepteur en sortie de fibre doivent être parfaitement alignés. La liaison porteur leurre nécessite également des joints tournant optiques qui sont coûteux et fragiles.

De plus, le câble avec fibre optique est beaucoup plus coûteux qu'un câble simple et à chaque fois que le leurre est utilisé, son câble doit être changé.

La présente invention a pour but de corriger au moins certains inconvénients de l'art antérieur en proposant un procédé de leurrage angulaire et un dispositif de leurrage tracté associé permettant d'utiliser les avantages d'un leurre piloté sans ses inconvénients, notamment sans avoir à utiliser de liaison à fibre optique.

A cet effet, l'invention a pour objet un procédé de leurrage angulaire mis en oeuvre par un porteur et un dispositif de leurrage apte à être tracté par ledit porteur comportant un brouilleur de bord et au moins une antenne de réception, ledit dispositif de leurrage possédant deux modes de fonctionnement et le choix du mode de fonctionnement étant déterminé en fonction des caractéristiques des signaux électromagnétiques captés par le groupe d'au moins une antenne du porteur.

Selon un mode de réalisation, le procédé comprend:
- une étape de réception de signaux,
- une étape d'analyse de ces signaux de façon à détecter des signaux menaçants,
- une étape de détermination du mode de fonctionnement du dispositif de leurrage pour répondre à la menace en cas de détection de signaux menaçants.

Selon un autre mode de réalisation le procédé de leurrage comprend, si le mode de fonctionnement choisi pour le dispositif de leurrage est le mode émetteur piloté :
- une étape de génération d'un signal de brouillage,
- une étape de transmission de ce signal de brouillage en direction du dispositif de leurrage,
- et une étape de réémission de ce signal de brouillage par le dispositif de leurrage.

Selon un autre mode de réalisation la transmission du signal de brouillage est effectuée à la même fréquence que le signal de brouillage.

Suivant une variante de réalisation, la transmission du signal de brouillage est effectuée après transposition de ce signal sur une fréquence différente de celle du signal de brouillage.

Suivant un exemple de réalisation, le signal de brouillage est réémis par le leurre après transposition du signal reçu.

Dans une forme de réalisation, le porteur est un aéronef.

Dans une autre forme de réalisation le porteur est un navire.

L'invention a également pour objet un dispositif de leurrage angulaire associé apte à mettre en oeuvre le procédé précédemment décrit et à être tracté par un porteur comprenant au moins un émetteur, un récepteur et un circuit d'amplification.

Suivant un mode de réalisation, le dispositif comprend un module de traitement de signaux apte à transposer en fréquence les signaux émis par le porteur.

Enfin, l'invention a pour objet un système de leurrage angulaire apte à mettre en oeuvre le procédé de leurrage comprenant un porteur et au moins un dispositif de leurrage.

Le principal avantage de la présente invention est une réduction significative des coûts, à la fois des coûts de développement (étude de l'installation dans le véhicule porteur, tenue dans l'environnement, notamment vibratoire...) et des coûts récurrents (le câble doit être changé après chaque déploiement).

D'autres particularités et avantages de la présente invention apparaîtront plus clairement à la lecture de la description ci-après, donnée à titre illustratif et non limitatif, et faite en référence aux dessins annexés, dans lesquels :
- Les figures 1a et 1b représentent respectivement un exemple de réalisation d'un dispositif de leurrage angulaire de type répondeur simple et de type émetteur ;
- La figure 2 représente un exemple de réalisation d'un système de leurrage angulaire selon l'invention ;
- La figure 3 illustre le principe de l'invention;
- La figure 4 représente un exemple de mise en oeuvre de l'étape de détermination du mode de fonctionnement du dispositif de leurrage ;
- La figure 5 représente un exemple de mise en oeuvre du procédé de leurrage suivant l'invention ;
- La figure 6 représente un exemple de séquencement dans le temps des différents signaux de leurrage, dans le cas de l'émission d'un seul faux écho.
- La figure 7 représente un exemple de séquencement des différents signaux de leurrage dans le cas d'émission de faux échos.

Dans ce qui suit, on prendra comme sens de direction, le sens de propagation du porteur. De ce fait, on appellera secteur avant la partie de l'espace se trouvant en regard de l'avant de la plate-forme mobile c'est-à-dire le nez de l'aéronef, dans le cas d'une application aéroportée, et la proue du navire dans le cas d'une application navale. Le secteur arrière représentera la partie de l'espace opposée au secteur avant. Il en est de même pour le dispositif de leurrage. Son secteur avant correspond à la partie de l'espace en regard du point d'attache du câble audit dispositif et son secteur arrière la partie opposée.

Le principe de l'invention consiste à utiliser un leurre tracté pouvant répondre à un signal radar incident suivant deux modes de fonctionnement, en mode répondeur simple (ou mode autonome) ou en mode répondeur piloté par le brouilleur de bord du véhicule porteur. Ce dispositif de leurrage angulaire tracté permet d'utiliser toutes les techniques de contre-mesures embarquées dans le porteur pour indiquer une fausse direction à une menace électromagnétique pour éviter le guidage d'une arme vers ledit porteur mobile.

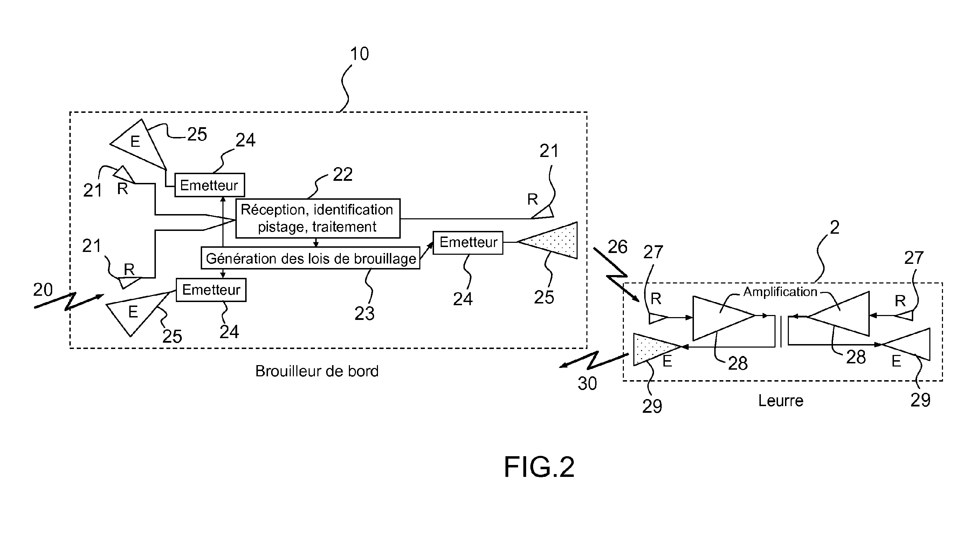

En référence aux figures 2 et 3, un exemple de réalisation du système de leurrage angulaire selon l'invention est présenté à travers une application aéroportée. Le système comprend un dispositif de leurrage 1 tracté par un porteur mobile 2 et est relié à celui-ci par l'intermédiaire d'un câble simple, sans utiliser de liaison complexe comportant notamment une fibre optique. Suivant une variante de réalisation, le système peut comporter plusieurs dispositifs de leurrage angulaire.

Lorsqu'un signal menaçant 20, comme par exemple un signal radar ou un signal issu d'un autodirecteur de missile, se présente en secteur avant, le signal électromagnétique 20 est reçu par une antenne de réception 21 du brouilleur de bord 10. Le signal est ensuite transmis à un module de traitement 22 du brouilleur de bord pour être traité. Le signal est détecté, identifié et pisté par au moins un calculateur du brouilleur de bord et en réponse, le calculateur du module 22 choisi un signal de brouillage. Ce signal de brouillage est ensuite généré par exemple par un module de brouillage 23 et transmis à un émetteur 24 placé à l'arrière de la plate-forme mobile 1 pour être rayonné en direction du dispositif de leurrage tracté 2 via une antenne d'émission 25. Le dispositif de leurrage 2 va recevoir ce signal de brouillage sur un récepteur 27 placé sur son secteur avant, et va le réémettre via un émetteur 29 également placé sur son secteur avant de façon à renvoyer le signal de brouillage 30 du leurre, après amplification 28, dans la même direction, c'est-à-dire vers la menace.

Il est à noter que le répondeur répond également sur la menace. Après avoir reçu le signal menaçant, le récepteur 27 du dispositif de leurrage 2 le transmet à un amplificateur 28 qui l'amplifie avant de le transmettre à l'émetteur 29 du leurre pour le renvoyer en direction de la menace.

Lorsque le signal menaçant 20 provient du secteur arrière, le dispositif de leurrage 2 fonctionne en mode répondeur tracté. Dans ce cas, le signal 20 est reçu par un récepteur 27 placé sur l'arrière du dispositif 2. Le signal est transmis à un amplificateur 28 et est ensuite réémis par un émetteur 29 placé à l'arrière du dispositif de leurrage 2 de façon le réémettre vers la menace.

Dans ce cas de figure, seul le leurre tracté répond à la menace et le brouilleur de bord 10 de la plate-forme mobile 1 n'est pas activé. En effet, lorsque le signal menaçant 20 vient du secteur arrière le signal 30 de réponse du leurre 2 présente le retard le plus court et donc la plus grande efficacité de leurrage.

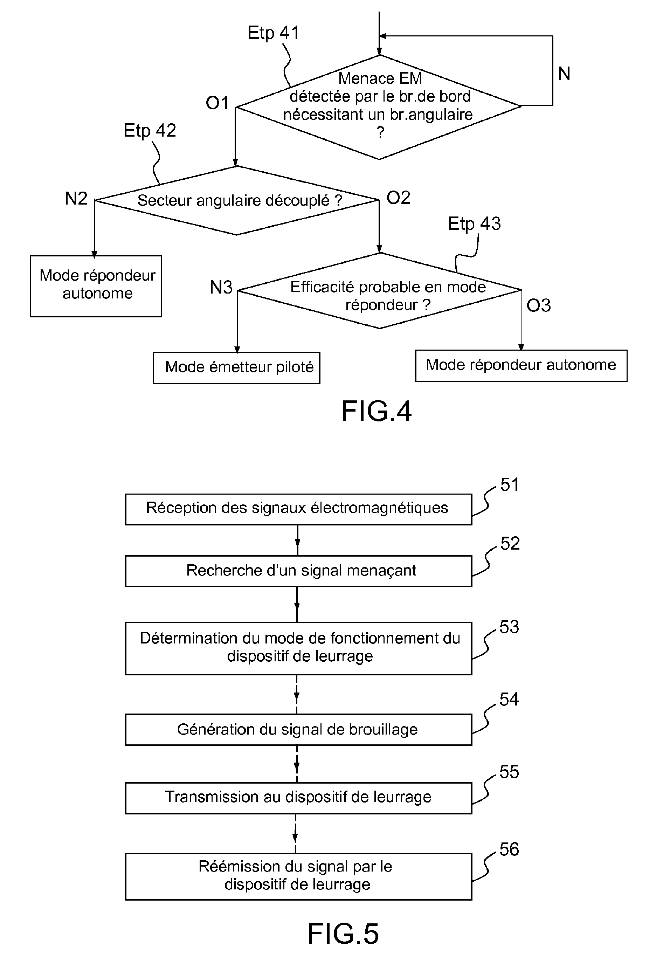

En référence à la figure 4, le principe de fonctionnement de l'invention va être expliqué.

Le système de contre-mesures de la plate-forme mobile 1, c'est-à-dire le brouilleur de bord 10 seul ou associé à d'autres capteurs, analyse les différents signaux électromagnétiques captés de façon à déterminer le degré de danger de ces derniers. En cas de danger, si le module de traitement 22 du brouilleur de bord 10 détecte un ou plusieurs signaux menaçants 20 nécessitant l'emploi d'une technique de brouillage angulaire, il détermine la direction d'arrivée et en déduit le mode de fonctionnement du dispositif de leurrage à savoir en répondeur autonome ou en émetteur piloté par le brouilleur de bord 10. Ce choix va dépendre de plusieurs facteurs.

Un critère peut être la nécessité ou non de mettre en oeuvre une technique de brouillage autre qu'une simple répétition du signal menaçant.

Dans le cas du fonctionnement en répondeur simple, le dispositif de leurrage répond de façon autonome sans l'intervention du brouilleur de bord 10. Le brouilleur de bord de la plate-forme mobile 1 à protéger peut ainsi employer toutes ses ressources contre d'autres menaces éventuelles.

Dans le cas du fonctionnement en mode émetteur piloté, le module de brouillage 23 détermine, à partir de l'analyse du module de traitement 22 et de sa bibliothèque de brouillage, la forme d'onde la plus appropriée pour répondre à la menace. Cette forme d'onde est ensuite transmise à un émetteur arrière (24, 25), ou un émetteur (24, 25) capable de couvrir le domaine angulaire dans lequel se trouve le dispositif de leurrage2, de façon à rayonner ladite forme d'onde vers le leurre2.

Un deuxième facteur peut être la direction d'arrivée du signal menaçant 20 et l'isolation émission/réception entre l'émission du dispositif de leurrage 2 et la réception du brouilleur de bord 10.

En effet, si le signal menaçant arrive sur un secteur angulaire pour lequel le signal réémis par le leurre en mode émetteur piloté peut perturber significativement le récepteur du brouilleur de bord, le mode répondeur simple sera privilégié. Dans la suite de la description, on appellera ce secteur "secteur angulaire non découplé".

Ce secteur angulaire correspond, par exemple, à un secteur majoritairement arrière. En effet, si le signal menaçant vient d'un secteur arrière, le dispositif de leurrage 2 va répondre en réémettant le signal vers son secteur arrière. Ce signal réémis peut être capté par une antenne de réception du brouilleur de bord placée à l'arrière de la plate-forme mobile 1 et être considéré comme un signal menaçant. Le phénomène est amplifié si le dispositif de leurrage 2 répond simultanément sur l'avant et l'arrière, quelle que soit la direction d'arrivée du signal menaçant. Le brouilleur de bord va alors générer un signal de brouillage et l'émettre en direction du dispositif de leurrage. Le leurre détectant un signal sur son avant va réémettre ce dernier vers son secteur avant et donc vers l'arrière de la plate-forme mobile 1 risquant ainsi « d'aveugler » le ou les récepteurs arrière du brouilleur de bord 10. Cette situation est à éviter car le brouilleur de bord doit pouvoir continuer à capter les signaux menaçants qui arrivent en direction de son secteur arrière de façon à pouvoir continuer de pister la menace.

Ce problème ne se pose pas lorsque le signal menaçant provient du secteur avant du porteur mobile. En effet, dans ce cas de figure, le dispositif de leurrage répond également sur son secteur avant et risque d'aveugler le ou les récepteurs du brouilleur de bord mais comme ce sont les récepteurs situés à l'avant du porteur mobile qui reçoivent les signaux menaçants, le système de contre-mesures peut continuer à pister la menace.

Il est à noter que lorsque l'on parle de secteur découplé, cela ne signifie pas obligatoirement secteur totalement découplé. Dans certains cas les récepteurs du secteur concerné peuvent être seulement partiellement désensibilisés. Le ou les récepteurs perdent de la sensibilité mais peuvent détecter certains signaux menaçants par exemple des signaux d'une certaine amplitude.

Dans le cas contraire, c'est-à-dire lorsque le signal réémis par le leurre en mode émetteur piloté ne risque pas de perturber le ou les récepteurs du système de contre-mesures le fonctionnement du dispositif de leurrage en émetteur piloté par le brouilleur de bord sera privilégié. Dans ce cas on parlera de "secteur angulaire découplé".

La valeur du découplage entre l'émission du leurre et la réception du brouilleur de bord 10 peut dépendre de différents facteurs comme par exemple :
- la distance entre les antennes de réception du brouilleur de bord et l'antenne d'émission active du dispositif de leurrage 2,
- la position dans l'espace de ces différentes antennes (interception du signal par les lobes principaux, secondaires ou diffus),
- la sensibilité du récepteur du brouilleur de bord 10 et des autres récepteurs à bord de la plate-forme mobile 1.
- la puissance rayonnée par le dispositif de leurrage, qui elle-même dépend de la puissance du signal menaçant 20 lorsqu'il fonctionne en mode répondeur simple et de la puissance émise par le brouilleur de bord 10 et de la puissance du signal menaçant 20 lorsqu'il fonctionne en mode émetteur piloté.

La détermination de cette valeur de découplage peut être effectuée pendant une phase d'étalonnage à partir des caractéristiques des divers équipements et à partir de mesures par exemple réalisées en chambre anéchoïque. Les résultats obtenus sont placés par exemple dans une zone mémoire du module de traitement 22 de façon à être pris en compte lors du choix du mode de fonctionnement du dispositif de leurrage.

Le choix du mode de fonctionnement du dispositif de leurrage va à présent être décrit en référence à l'ordinogramme de la figure 4. Ce choix est déterminé en fonction des caractéristiques des signaux électromagnétiques captés par la ou les antennes de réception 21 du porteur 1.

Le module de traitement 22 reçoit et analyse tous les signaux captés par la ou les antennes de réception 21 du porteur afin de détecter la présence de signaux menaçants 20. S'il détecte un signal menaçant 20, le module de traitement 22 détermine Etp41 si un brouillage angulaire est nécessaire pour protéger le porteur 1.

Si la menace nécessite un brouillage 01, le module de traitement 22 analyse si le secteur est découplé ou non Etp42, si le signal de brouillage émis par le leurre est susceptible de gêner le système de contre-mesures. Si le secteur n'est pas découplé N2, le brouilleur de bord ne transmet pas de signaux de brouillage au dispositif de leurrage 2 et ce dernier fonctionne en mode répondeur autonome. Le brouilleur de bord peut ainsi libérer un canal de brouillage pour traiter d'autres signaux menaçants.

Si le secteur est découplé 02, le module de traitement 22 détermine ensuite quel mode de réponse est le plus approprié Etp43 et suivant le cas choisi un mode de réponse en émetteur piloté N3 ou en mode répondeur autonome 03.

La figure 5 résume un exemple de mode de mise en oeuvre du procédé de leurrage suivant l'invention dans le cas d'une réponse du dispositif de leurrage 2 en mode émetteur piloté par le brouilleur de bord 10 du porteur 1.

Le procédé comprend une première étape 51 de réception des différents signaux électromagnétiques autour du porteur1. Le module de traitement 22 recherche la présence de signaux menaçants 20 parmi les signaux reçus au cours d'une étape 52. En cas de présence d'une menace nécessitant un leurrage, le mode de fonctionnement du dispositif de leurrage 2 est déterminé au cours d'une étape 53. Si le mode émetteur piloté est choisi, le générateur de signaux de brouillage 23 génère la forme d'onde susceptible de contrer le signal menaçant 20 au cours d'une étape 54. Ce signal est ensuite transmis à un émetteur placé à l'arrière du porteur 1 afin de le transmettre au dispositif de leurrage 2 au cours d'une étape 55. Après réception et amplification par le leurre 2, le signal est retransmis au cours d'une étape 56.

Suivant un mode de mise en oeuvre particulier le signal de brouillage 26 est transposé sur une fréquence différente avant sa transmission au dispositif de leurrage. Le signal est ensuite retransposé sur sa fréquence d'origine par un calculateur du dispositif de leurrage avant sa réémission.

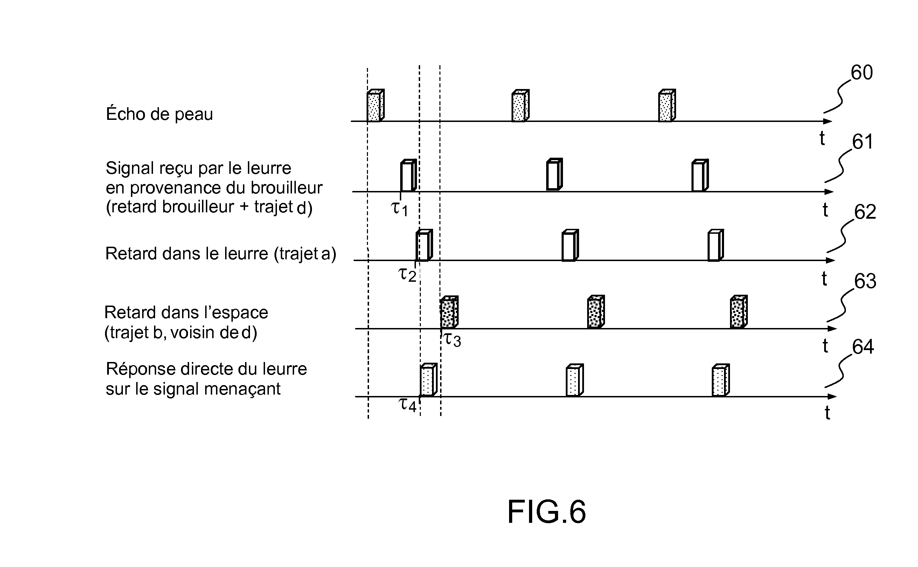

En référence aux figures 3 et 6, le séquencement dans le temps des différents signaux dans le cas d'une simple répétition du signal du brouilleur de bord est présenté. Les différents chronogrammes correspondent au cas où le dispositif de leurrage fonctionne en mode émetteur piloté.

Le chronogramme 60 représente les différents échos de peau du porteur c'est-à-dire la réflexion du signal menaçant 20 sur la surface du porteur 1. Ce signal est pris comme référence temporelle dans les différents chronogrammes de la figure 6.

Le chronogramme 61 représente les différents signaux émis par le brouilleur de bord 10 et reçu par le dispositif de leurrage 2. Le décalage τ₁ par rapport aux échos de peau correspond au retard de traitement du signal à l'intérieur des différentes chaînes de traitement du brouilleur de bord 10 et au temps de transmission entre le porteur et le dispositif de leurrage (trajet d).

Le chronogramme 62 représente les différents signaux en sortie du dispositif de leurrage. Le retard (τ₂ - τ₁) entre les chronogrammes 62 et 61 correspond au temps de propagation du signal à l'intérieur des chaînes de traitement du dispositif de leurrage (trajet a).

Le chronogramme 63 représente les signaux réémis par le dispositif de leurrage au niveau du porteur. Le retard par rapport au chronogramme précédent correspond au temps de propagation dans l'espace entre le leurre 2 et le porteur 1.

Le chronogramme 64 représente la réponse directe du dispositif de leurrage 2 aux signaux menaçant 20, c'est-à-dire les signaux menaçants directement réémis par le dispositif de leurrage sans passer par le brouilleur de bord 10. La différence de retard avec le chronogramme précédent (τ₃-τ₄) correspond au temps de transit dans les différentes chaînes de traitement du brouilleur de bord et à la différence des temps de trajet b et d.

Les impulsions du signal venant brouilleur de bord sont en retard par rapport aux impulsions de l'écho de peau et également en retard par rapport aux impulsions du signal de la réponse directe du dispositif de leurrage 2 sur le signal menaçant 20.

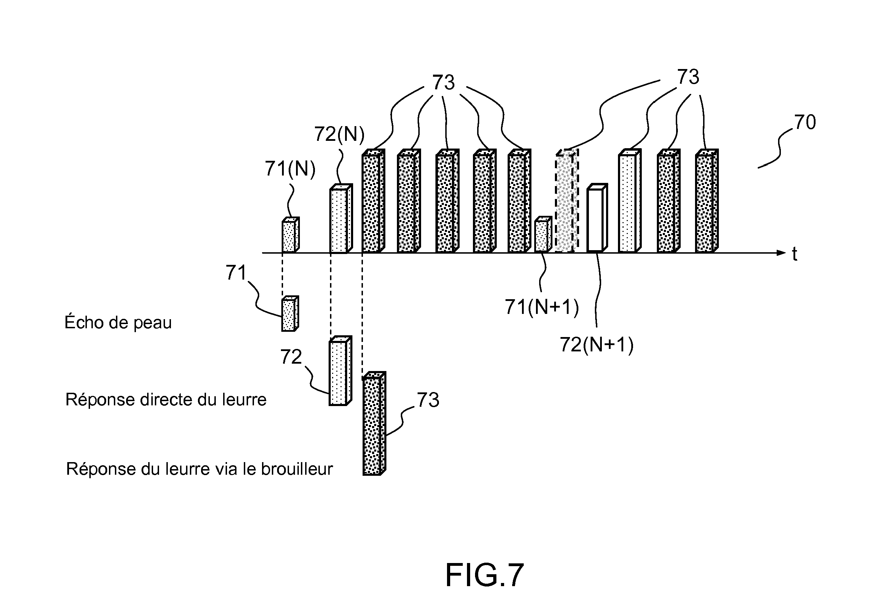

La figure 7 illustre un mode de leurrage un peu plus complexe qui correspond au cas d'émissions de faux échos. Dans ce cas le générateur de bord répète les impulsions 73 du signal de brouillage plusieurs fois. Pour cela, l'impulsion générée par le module 23 du brouilleur de bord 10 est enregistrée par exemple dans une zone mémoire du module de génération des lois de brouillage 23, puis est réémise.

Suivant une variante de mise en oeuvre, les impulsions 73 du signal de brouillage sont répétées sur un temps plus long que la période de répétition des impulsions du signal menaçant. Le procédé va ainsi permettre de présenter des impulsions 73 avant et après les impulsions 71 de l'écho de peau réel. Ceci permet de créer une multitude de faux échos autour des impulsions 71 de l'écho de peau réel de sorte que le radar menaçant ne puisse pas distinguer l'écho de peau du porteur à protéger.

Suivant une variante de mise en oeuvre un retard supplémentaire peut être créé au niveau du brouilleur de bord 10, par exemple à l'aide de lignes à retard. Cette impulsion est ensuite enregistrée et répétée sur une période de temps supérieure à la période de répétition des impulsions du signal menaçant 20 pour couvrir plusieurs récurrences. Ceci permet de placer plusieurs faux échos autour de l'écho de peau. Cela permet également de présenter le faux écho devant les impulsions suivantes de sorte que le radar ou l'autodirecteur ennemi ne puissent pas savoir si ce faux écho qui est devant l'écho de peau de l'avion est en fait le véritable écho ou s'il provient de l'impulsion précédente.

L'invention a été décrite à travers un exemple d'application dans le domaine aéronautique, cependant elle ne se limite pas à ce domaine, et peut très bien trouver des applications dans les domaines terrestre ou maritime.

## Revendications

1. Procédé de leurrage angulaire mis en oeuvre par un porteur (1) et au moins un dispositif de leurrage (2) apte à être tracté par ledit porteur comportant un brouilleur de bord (10) et au moins une antenne de réception (21), le procédé étant **caractérisé en ce que** ledit dispositif de leurrage (2) possède deux modes de fonctionnement et **en ce que** le choix du mode de fonctionnement est déterminé en fonction des caractéristiques des signaux électromagnétiques captés par le groupe d'au moins une antenne du porteur (1).

2. procédé selon la revendication précédente **caractérisé en ce qu'il** comprend :
- une étape de réception de signaux,
- une étape d'analyse de ces signaux de façon à détecter des signaux menaçants,
- une étape de détermination du mode de fonctionnement du dispositif de leurrage (2) pour répondre à la menace en cas de détection de signaux menaçants (20).

3. Procédé de leurrage suivant une des revendications précédentes **caractérisé en ce qu'il** comprend, si le mode de fonctionnement choisi pour le dispositif de leurrage est le mode émetteur piloté :
- une étape de génération d'un signal de brouillage,
- une étape de transmission de ce signal de brouillage (26) en direction du dispositif de leurrage (2),
- et une étape de réémission de ce signal de brouillage par le dispositif de leurrage (2).

4. Procédé selon la revendication précédente **caractérisé en ce que** la transmission du signal de brouillage est effectuée à la même fréquence que le signal de brouillage.

5. Procédé selon la revendication 3 **caractérisé en ce que** la transmission du signal de brouillage est effectuée après transposition de ce signal sur une fréquence différente de celle du signal de brouillage.

6. Procédé selon la revendication précédente **caractérisé en ce que** le signal de brouillage est réémis par le leurre après transposition du signal reçu.

7. Procédé selon une des revendications précédentes **caractérisé en ce que** le porteur est un aéronef.

8. Procédé selon une des revendications 1 à 6 **caractérisé en ce que** le porteur est un navire.

9. Dispositif de leurrage angulaire (2) apte à mettre en oeuvre le procédé selon une des revendications précédentes et à être tracté par un porteur (1) **caractérisé en ce qu'il** comprend au moins un émetteur (27), un récepteur (29) et un circuit d'amplification.

10. Dispositif selon la revendication précédente **caractérisé en ce qu'il** comprend un module de traitement de signaux apte à transposer en fréquence les signaux émis par le porteur (1).

11. Système de leurrage angulaire apte à mettre en oeuvre le procédé de leurrage suivant une des revendications 1 à 8 comprenant un porteur (1) et au moins un dispositif de leurrage selon une des revendications 9 ou 10.
